# EUROPEAN PATENT APPLICATION

(11) **EP 4 838 806 A1**
(43) Date of publication of application: **11.11.2026**
(21) Application number: 25736324.2
(22) Date of filing: 06.01.2025
(51) Int. Cl.: H04B 7/06, H04B 7/0452, H04L 5/00, H04W 84/12

(54) **METHOD AND DEVICE FOR PERFORMING BEAMFORMING TRAINING PROCEDURE IN CONSIDERATION OF MILLIMETER WAVE BAND IN WIRELESS LAN SYSTEM**

(30) Priority: 05.01.2024 KR 20240002346
(71) Applicant: LG Electronics Inc., Yeongdeungpo-gu Seoul 07336 (KR)
(72) Inventor: PARK, Eunsung, Seoul 06772 (KR); CHOI, Jinsoo, Seoul 06772 (KR); JANG, Insun, Seoul 06772 (KR); JUNG, Insik, Seoul 06772 (KR); CHA, Dongju, Seoul 06772 (KR)
(74) Representative: Plasseraud IP
(86) International application number: PCT/KR2025/000212
(87) International publication number: WO 2025/147170

(57) **Abstract**

A method and a device for performing a beamforming training procedure in consideration of a millimeter wave band in a wireless LAN system are disclosed. The method according to one embodiment of the present disclosure may comprise steps in which a first station (STA): transmits, to a second STA, one or more first frames for beamforming training based on N (N>1) sectors; and receives, from the second STA, a second frame including information about the best sector from among the N sectors. Here, the beamforming training can include a sector level sweep step and/or a beam refinement protocol step. On the basis that a plurality of procedure types for the beamforming training are defined, information about a specific procedure type to be applied to the beamforming training from among the plurality of procedure types can be exchanged between the first STA and the second STA before the beamforming training.

## Description

### [TECHNICAL FIELD]

The present disclosure relates to a method and device for performing a beamforming training procedure considering a millimeter wave (mmWave) band in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [DISCLOSURE]

### [TECHNICAL PROBLEM]

A technical object of the present disclosure is to provide a method and device for performing a beamforming training procedure considering a millimeter wave (mmWave) band in a wireless local area network (WLAN) system.

A technical object of the present disclosure is to provide a method and device for performing a sector level sweep (SLS) procedure and a beam refinement protocol (BRP) procedure when a mmWave band is supported in a wireless LAN system.

The technical objects to be achieved by the present disclosure are not limited to the above-described technical objects, and other technical objects which are not described herein will be clearly understood by those skilled in the pertinent art from the following description.

### [Technical Solution]

A method according to an aspect of the present disclosure may include transmitting, by a first station (STA), one or more first frames for beamforming training based on N (N>1) sectors to a second STA; and receiving, by the first STA, a second frame including information for the best sector among the N sectors from the second STA. Here, the beamforming training may include one or more of a sector level sweep phase or a beam refinement protocol phase. Based on multiple procedure types for the beamforming training being defined, prior to the beamforming training, information for a specific procedure type to be applied to the beamforming training among the multiple procedure types may be exchanged between the first STA and the second STA.

A method according to an additional aspect of the present disclosure may include receiving, by a second station (STA), one or more first frames for beamforming training based on N (N>1) sectors from a first STA; and transmitting, by the second STA, a second frame including information for the best sector among the N sectors to the first STA. Here, the beamforming training may include one or more of a sector level sweep phase or a beam refinement protocol phase. Based on multiple procedure types for the beamforming training being defined, prior to the beamforming training, information for a specific procedure type to be applied to the beamforming training among the multiple procedure types may be exchanged between the first STA and the second STA.

### [Technical Effects]

According to the present disclosure, a method and device for performing a beamforming training procedure considering a millimeter wave (mmWave) band in a wireless local area network (WLAN) system may be provided.

According to the present disclosure, when the mmWave band is supported in a wireless LAN system, a method and device for performing a sector level sweep (SLS) procedure and a beam refinement protocol (BRP) procedure may be provided.

According to the present disclosure, there is an advantage in that a high data rate and low latency can be achieved by efficiently supporting the mmWave band in a wireless LAN system.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIGS. 8 to 10 are a diagram for explaining examples of resource units of a wireless LAN system to which the present disclosure may be applied.
FIG. 11 is a diagram showing regional examples of channelization of a millimeter wave (mmWave) band to which the present disclosure may be applied.
FIG. 12 illustrates an example of an SLS procedure between an AP and a STA according to an embodiment of the present disclosure.
FIG. 13 illustrates another example of an SLS procedure between an AP and a STA according to an embodiment of the present disclosure.
FIG. 14 illustrates another example of an SLS procedure between an AP and a STA according to an embodiment of the present disclosure.
FIG. 15 illustrates an example of a BRP procedure between an AP and a STA according to an embodiment of the present disclosure.
FIG. 16 illustrates another example of a BRP procedure between an AP and a STA according to an embodiment of the present disclosure.
FIG. 17 illustrates another example of a BRP procedure between an AP and a STA according to an embodiment of the present disclosure.
FIG. 18 illustrates the operation of a first STA according to an embodiment of the present disclosure.
FIG. 19 illustrates the operation of a second STA according to an embodiment of the present disclosure.
FIG. 20 is a diagram for describing a PPDU transmission and reception procedure between a transmitting STA and a receiving STA according to the embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

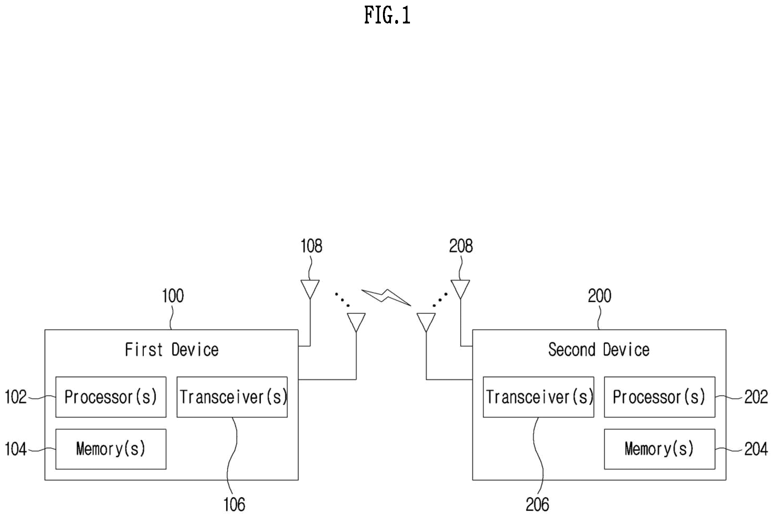

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

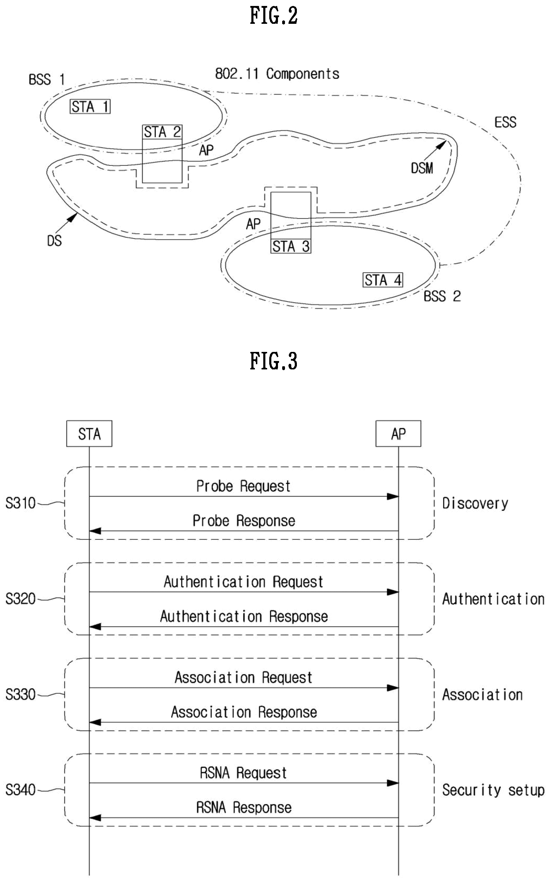

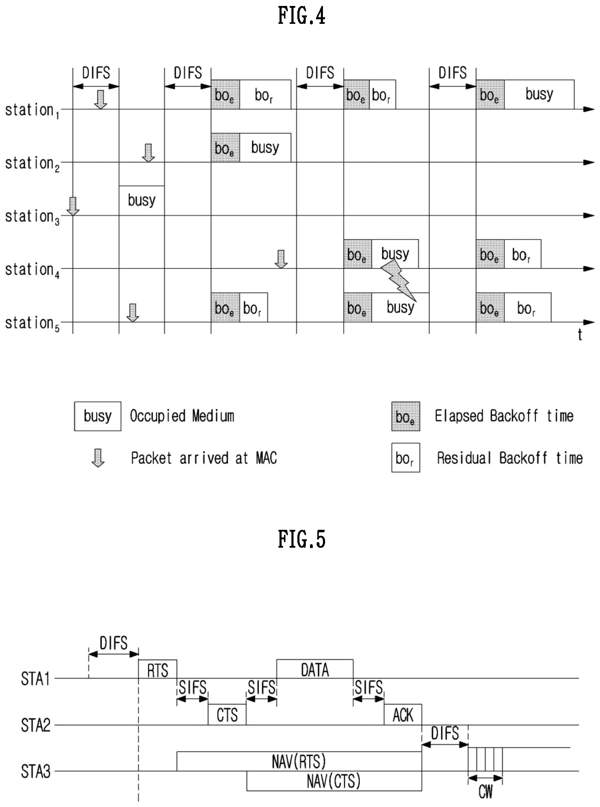

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

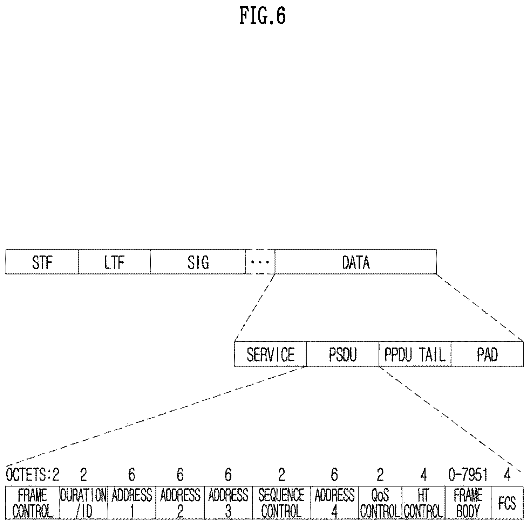

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

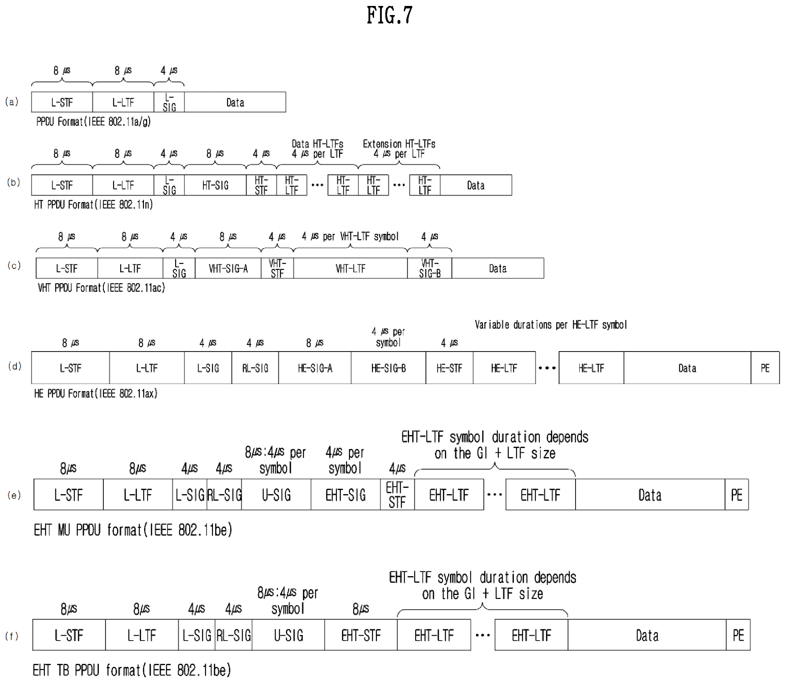

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Beamforming training

Beamforming training may determine appropriate reception and transmission antenna sectors for a pair of STAs. This may be achieved through transmission of a bidirectional training frame sequence.

A beamforming phase is divided into two sub-phases. First, during a sector level sweep (SLS), an initial coarse-grain antenna sector configuration may be determined. The corresponding information is used in a subsequent optional beam refinement phase (BRP), in which fine-tuning may be performed on the selected sector.

First, an operation in an SLS phase is described.

During SLS, two STAs may each train a transmission antenna sector or a reception antenna sector.

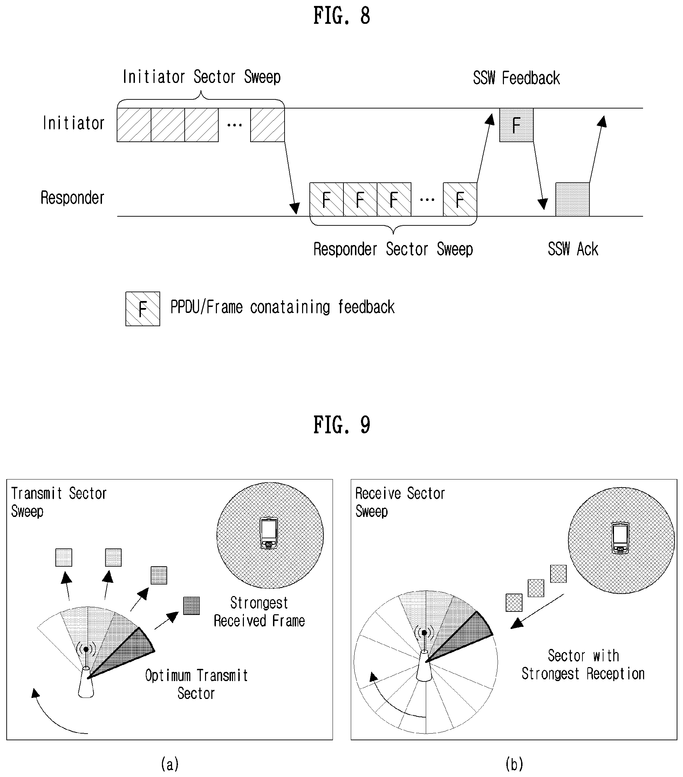

During SLS, a pair of STAs may exchange a series of sector sweep (SSW) frames (or a beacon in the case of transmission sector training transmitted by a PCP/AP) across multiple antenna sectors to find a sector providing the highest signal quality. For example, during SLS, each STA may operate once as a transmitter and once as a receiver, as shown in FIG. 8.

FIG. 8 illustrates a sector level sweep (SLS) phase applicable to the present disclosure.

Referring to FIG. 8, an STA that performs transmission first may correspond to an initiator, and the other paired STA may correspond to a responder.

A sweep of the initiator and a sweep of the responder may be utilized in two different manners as shown in FIG. 9.

FIG. 9 illustrates two types of sector sweeps applicable to the present disclosure.

Referring to FIG. 9, (a) of FIG. 9 represents a transmit sector sweep (TXSS), and (b) of FIG. 9 represents a receive sector sweep (RXSS).

During a transmit sector sweep (TXSS), frames may be transmitted over different sectors, while a pairing node may receive using a quasi-omni directional pattern. In order to identify the strongest transmit sector, a transmitter may mark an identifier for an antenna and a sector used for each frame.

In addition, during a receive sector sweep (RXSS), transmission in the same sector (a best known sector) may test an optimal receive sector at a pairing node. Overall, combinations of sweeps for SLS may include four types as follows.
- Transmit sector sweep (TXSS) at both an initiator and a responder
- Receive sector sweep (RXSS) at both STAs
- Initiator RXSS and responder TXSS
- Initiator TXSS and responder RXSS

For an achieved optimal SNR and in the case of TXSS, a sector and an antenna identifier may be reported to a pairing node, and such SLS feedback may follow a structure shown in FIG. 7.

Feedback for the initiator is conveyed by all frames of a responder sector sweep, which may ensure reception under an optimal antenna configuration that is not yet known. Feedback for the responder may be transmitted as a single SSW feedback PPDU/frame in a determined optimal antenna configuration. Finally, the SSW feedback PPDU/frame may be acknowledged as an SSW-ACK by the responder. The last PPDU/frame may be further used to negotiate details of a subsequent BRP.

If two STAs have sufficient transmit antenna gain, an SLS phase thereof may be realized as pure transmit sector training, and receive sector training may be deferred to a subsequent BRP. In addition, an initiator may instruct/request a responder to perform a receive sector sweep by specifying a number of receive sectors to be trained during its own sweep, that is, an initiator sweep. If the initiator sweep corresponds to receive sector training, additional signaling may be required prior to the SLS phase.

Next, an operation in a BRP is described.

The BRP may refine a sector discovered in the SLS phase. The corresponding sector is determined using a non-uniform quasi-omni-directional antenna pattern, and may have non-optimal signal quality. In addition, the BRP may contemplate optimization of an antenna weight vector for a phased antenna array, irrespective of a pre-defined sector pattern.

Through this, a beam training search space may be increased while obtaining an additional throughput gain. Although a free variation of an antenna weight vector may result in an arbitrary antenna pattern, in the case of an antenna configuration providing high throughput, directional characteristics may be maintained as they are. Accordingly, a training process for a pre-defined directional sector and antenna weight vector optimization may be maintained identically. Finally, if a BRP is not a part of a previous SLS, the BRP may be used to train a reception antenna configuration.

A BRP transaction may evaluate a set of directional transmission or reception patterns with respect to a direction configuration known to be best at a pairing node. Accordingly, imperfection of a quasi-omni pattern may be prevented. Since the BRP depends on a preceding SLS phase, reliable PPDU/frame exchange may be ensured and various antenna configurations may be tested within the same PPDU/frame. This may significantly reduce transmission overhead, unlike SLS in which an entire PPDU/frame is required to test a sector. In this regard, in order to sweep antenna configurations over an entire PPDU/frame, transmission and reception training fields (TRN-T/R) may be added to a PPDU/frame exchanged during a BRP transaction. Each field may be transmitted or received with an antenna configuration to test signal quality. A remaining portion of the PPDU/frame may be transmitted and received with an antenna configuration known to be best.

BRP reception antenna training may be requested by specifying a number of configurations to be tested in an L-RX header field of a PPDU/frame. A pairing node may add a corresponding number of TRN-R fields to a next PPDU/frame. Transmission training may be requested by setting a TX-TRN-REQ header field and adding a TRN-T field to the same BRP PPDU/frame. Optionally, an acknowledgment PPDU/frame in which a TX-TRN-OK field is set without adding a training field may be transmitted by a receiver before a requester adds a TRN-T field to a next PPDU/frame. As in SLS, BRP feedback may be provided in the form of an SNR for a best found configuration and, in the case of transmission training, a best configuration ID.

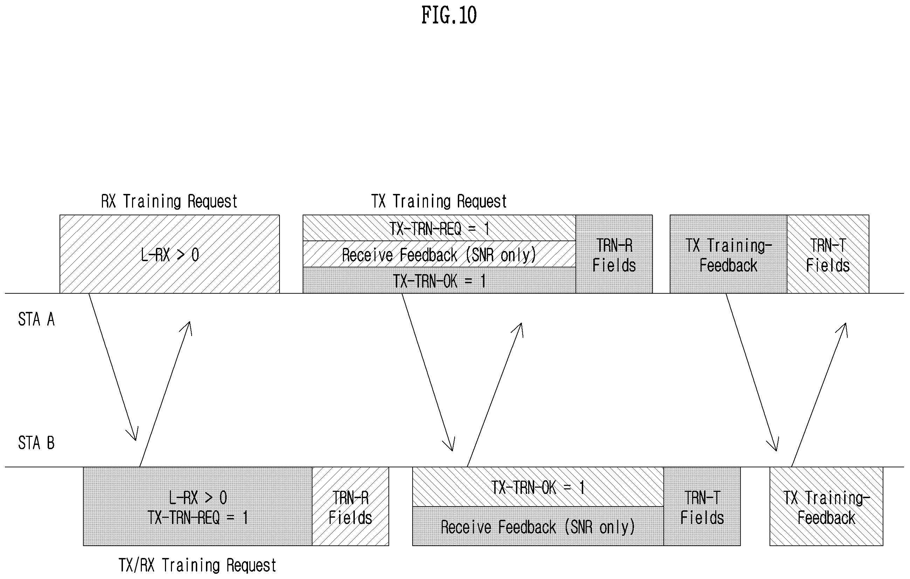

FIG. 10 illustrates a BRP transaction applicable to the present disclosure.

Referring to FIG. 10, a BRP transaction may be configured to first train a reception configuration between two STAs and then perform additional transmission training refinement.

For example, STA B may combine a transmission and reception training request into one PPDU/frame by using the aforementioned request variation. In contrast, STA A may request two transmission directions using two PPDU/frames.

A BRP phase may follow immediately after SLS by using an SSW ACK frame for parameter exchange. Alternatively, the BRP phase may be initiated based on a special BRP setup sub-phase composed of a BRP frame without a training field. In either case, an L-RX field and a TX-TRN-REQ field may be used to exchange BRP parameters.

### A beamforming training procedure in a millimeter wave (mmWave) band

The description of the wireless LAN system described above may be mainly applied to a wireless LAN system operating in an existing operating frequency band, for example, a sub-7 GHz band (for example, a 2.4 GHz, 5 GHz, or 6 GHz band). For example, the PPDU format described above may be mainly applied to a wireless LAN system operating in a sub-7 GHz band. Additionally, a wireless LAN system operating in a high operating frequency band, for example, a millimeter wave (mmWave) band such as a 60 GHz band, has been defined.

The present disclosure describes examples of beamforming training procedures that take into account improved throughput and efficiency in the mmWave band, including (i.e., not limited to) the 60 GHz band.

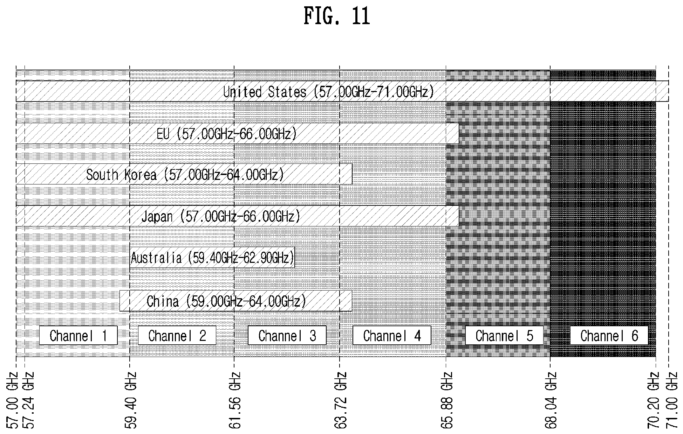

FIG. 11 is a diagram showing regional examples of channelization of millimeter wave (mmWave) bands to which the present disclosure may be applied.

The example in Fig. 11 shows the mmWave bands used in the United States, the European Union, South Korea, Japan, Australia, and China, and shows the sizes and locations of channels defined in the bands. For example, the bandwidth of each of the six channels may correspond to 2.16 GHz. In addition, when bandwidth bonding is applied, up to four unit bandwidths may be bonded to support a bandwidth of up to 8.64 GHz.

Unlike these existing wireless LAN systems, technologies under discussion such as UHR are discussing using sub-7 GHz bands (e.g., 2.4 GHz, 5 GHz, or 6 GHz bands) and/or mmWave bands (e.g., 60 GHz bands) to achieve high data rates and low delays. For example, for specific use cases requiring high throughput, it may be difficult to satisfy the requirements with only the bandwidth of the currently defined channel, so transmitting/receiving specific PPDUs through the mmWave band may be considered.

However, due to channel characteristics in an mmWave band, it is necessary to transmit a PPDU to which beamforming is applied, and for this purpose, a sector level sweep (SLS) procedure and/or a beam refinement protocol (BRP) procedure, etc. may be required as a beamforming training procedure.

In addition, according to a use case (e.g., the purpose/situation of PPDU transmission and reception, etc.), various beamforming training procedures may be considered, such as a method requiring beamforming accuracy and a method requiring rapid performance for beamforming configuration. As an example, the former method may consider throughput, while the latter method may consider latency.

The present disclosure proposes various beamforming training procedures in a next-generation WLAN system (e.g., UHR, beyond UHR, etc.) capable of supporting an mmWave band and a signaling method for the same.

In relation to the description in the present disclosure, a term of "sector" may be replaced with a term such as "region", "direction", "antenna configuration", or "antenna weight vector", etc. which have the same/similar technical meaning.

### Embodiment 1

This embodiment relates to various beamforming training procedures that may be supported in a WLAN system supporting an mmWave band.

In this embodiment, various procedures are described by using a case in which an initiator corresponds to an AP and a responder corresponds to a non-AP STA (hereinafter, referred to as an STA for clarity of description) in a beamforming training procedure as a representative example.

### Embodiment 1-1

First, various sector level sweep (SLS) procedures in a WLAN system supporting an mmWave band according to the present disclosure are described.

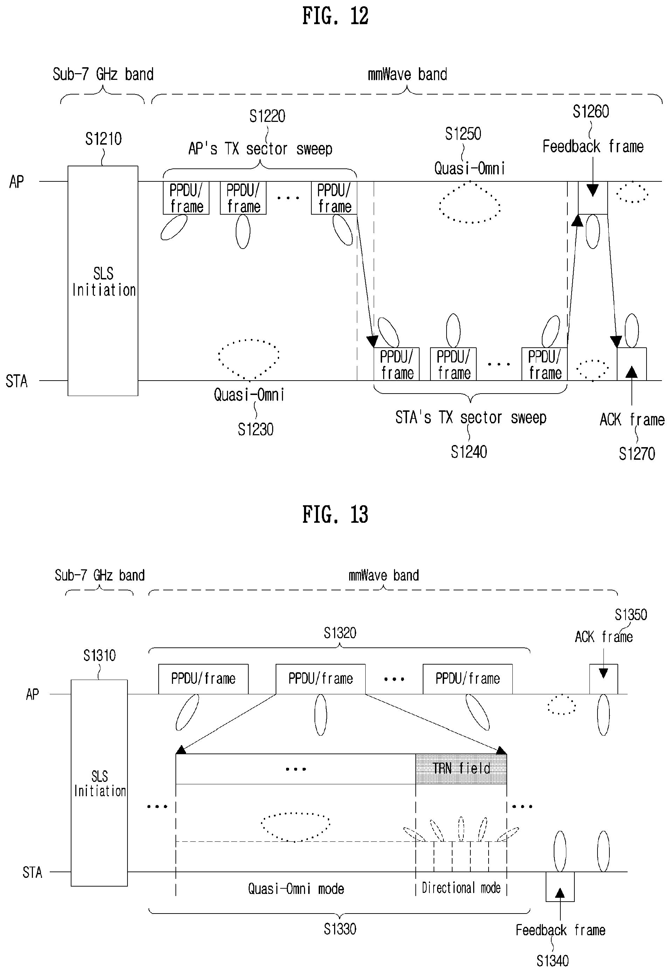

FIG. 12 illustrates an example of an SLS procedure between an AP and a STA according to an embodiment of the present disclosure.

Referring to FIG. 12, for the SLS procedure between the AP and the STA, SLS initiation may be configured/defined to be performed in the sub-7 GHz band, and the remaining operations may be performed in the mmWave band.

First, SLS initiation may be performed in the sub-7 GHz band for AP and STA (S1210).

For example, in relation to transmission of sector sweep and feedback/ACK frame in SLS procedure, allocation information for specific time and/or frequency resources (e.g., channel, subchannel), information on the number of PPDU/frames in a burst of PPDU/frame, sector information, etc. may be indicated. Here, PPDU/frame may correspond to a packet related to sector sweep (e.g., SSW packet).

In this regard, specific time and/or frequency resources may be resources allocated for operation in the mmWave band.

An AP may transmit a burst of specific PPDUs/frames in the allocated time and/or frequency resources (S1220).

In this regard, each PPDU/frame included in a corresponding burst may include information indicating a sector ID for a transmission direction (e.g., information for its own sector ID).

At this time, the STA may measure the best TX sector ID of the AP using the corresponding PPDU/frame (S1230). In this case, the STA may receive the burst of the specific PPDU/frame in a quasi-omni mode.

Here, the best TX sector ID can be configured in the form of a list containing one or more TX sector IDs.

After a burst transmission of the AP, the STA may transmit a burst of a specific PPDU/frame on the allocated time and/or frequency resources or on the same frequency resources after a certain period of time (e.g. SIFS) after the end of the burst transmission of the AP (S1240).

In this regard, each PPDU/frame included in a corresponding burst may include information indicating a sector ID for a transmission direction (e.g., information for its own sector ID). At the same time, an STA may provide feedback on information for the best TX sector ID of an AP to an AP.

At this time, the AP may measure the best TX sector ID of the STA using the corresponding PPDU/frame (S1250). In this case, the AP may receive the burst of the specific PPDU/frame in a quasi-omni mode.

After the burst transmission of the STA, the AP may transmit a feedback frame to the STA according to the best TX sector direction fed back by the STA on the allocated time and/or frequency resources or on the same frequency resources after a certain time (e.g., SIFS) after the burst transmission of the STA ends (S1260). Here, the feedback frame may include information on the best TX sector ID of the STA. For example, the STA may receive the feedback frame in a quasi-omni mode.

Next, the STA may transmit a response frame (e.g., an ACK frame) according to the best TX sector direction fed back by the AP on the same frequency resource after a certain period of time (e.g., SIFS) after the end of the transmission of the feedback frame by the AP and/or the allocated time and/or frequency resource (S1270). For example, the STA may receive the feedback frame in a quasi-omni mode.

With respect to the steps in the aforementioned FIG. 12, step S1210 may be set/defined to be performed in the sub-7 GHz band, and the remaining steps (i.e., steps S1220 to S1270) may be configured/defined to be performed in the mmWave band.

FIG. 13 illustrates another example of an SLS procedure between an AP and a STA according to an embodiment of the present disclosure.

Referring to FIG. 13, compared to FIG. 12, the SLS procedure may be simplified by utilizing antenna pattern reciprocity as described above in the present disclosure.

First, SLS initiation may be performed in the sub-7 GHz band for AP and STA (S1310).

For example, in relation to transmission of sector sweep and feedback/ACK frame in SLS procedure, allocation information for specific time and/or frequency resources (e.g., channel, subchannel), information on the number of PPDU/frames in a burst of PPDU/frame, information for a sector, etc. may be indicated. Here, PPDU/frame may correspond to a packet related to sector sweep (e.g., SSW packet).

In this regard, specific time and/or frequency resources may be resources allocated for operation in the mmWave band.

An AP may transmit a burst of specific PPDUs/frames in the allocated time and/or frequency resources (S1320).

In this regard, each PPDU/frame included in a corresponding burst may include information indicating a sector ID for a transmission direction (e.g., information for its own sector ID).

At this time, the STA may measure the best TX sector ID of the AP using the PPDU/frame included in the burst and perform its own RX sector sweep (S1330).

In this regard, a specific training field (TRN field) may be defined to be included in the last part of the corresponding PPDU/frame to support RX sector sweep of the STA. For example, the specific training field may be designed to have the same or similar structure as the TRN field of the EDMG BRP-RX/TX PPDU, the TRN-R unit, etc.

Specifically, the STA performs reception operation in quasi-omni mode only during TX sector sweep of the AP, and may be configured/defined to operate in RX sector sweep mode only for specific training fields.

After the burst transmission of the AP, the STA may transmit a feedback frame to the AP in the same TX direction using its best RX sector in the same frequency resource after a certain time (e.g. SIFS) after the burst transmission of the AP is finished, using the allocated time and/or frequency resources (S1340). Here, the feedback frame may include information about the best TX sector ID of the AP. For example, the AP may receive the feedback frame in a quasi-omni mode.

Next, the AP may transmit a response frame (e.g., an ACK frame) according to the best TX sector direction fed back by the STA on the same frequency resource after a certain period of time (e.g., SIFS) after the assigned time and/or frequency resource or the feedback frame transmission of the STA is ended (S1350). In this case, an STA may receive a corresponding response frame according to its best RX sector direction.

In a simplified procedure as in Fig. 13, the STA may use its measured best RX sector in the TX sector direction, and the AP may use its best TX sector fed back from the STA in the RX sector direction.

Additionally or alternatively, in the procedures in FIGS. 12 and 13 described above, when transmitting a burst of PPDU/frame, the sector ID and its order information may be indicated in the sub-7 GHz band. In this case, the information may be defined not to be indicated in each PPDU/frame within the burst.

With respect to the steps in the aforementioned FIG. 13, step S1310 may be set/defined to be performed in the sub-7 GHz band, and the remaining steps (i.e., steps S1320 to S1350) may be configured/defined to be performed in the mmWave band.

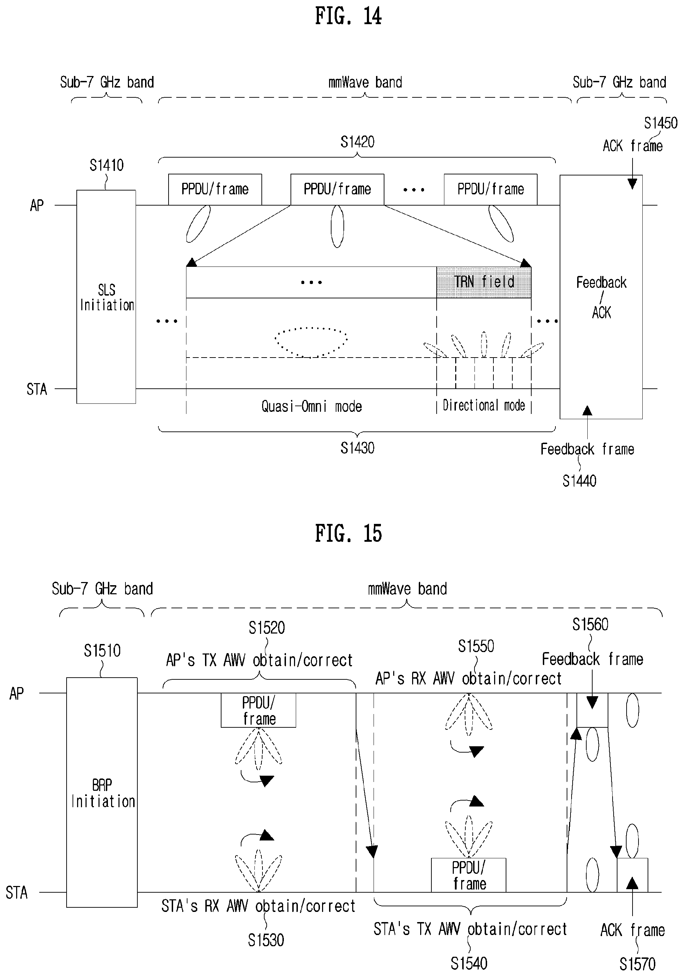

FIG. 14 illustrates another example of an SLS procedure between an AP and a STA according to an embodiment of the present disclosure.

Referring to FIG. 14, compared to FIG. 13, the transmission and reception operations of the feedback frame and the response frame within the SLS procedure may be performed in a different operating frequency band, i.e., the sub-7 GHz band. That is, the SLS initiation, the transmission and reception of the feedback frame, and the transmission and reception of the response frame may be performed in the sub-7 GHz band, and in the mmWave band, it may be configured/defined to simply transmit and receive PPDU/frames for sector sweep.

First, SLS initiation may be performed in the sub-7 GHz band for AP and STA (S1410).

For example, in relation to transmission of sector sweep and feedback/ACK frame in SLS procedure, allocation information for specific time and/or frequency resources (e.g., channel, subchannel) for burst transmission of PPDU/frame by AP, information for the number of PPDU/frame in the burst, information for a sector, etc. may be indicated. Here, PPDU/frame may correspond to a packet related to sector sweep (e.g., SSW packet).

In this regard, specific time and/or frequency resources may be resources allocated for operation in the mmWave band.

An AP may transmit a burst of a specific PPDU/frame in the allocated time and/or frequency resources (S1420).

In this regard, each PPDU/frame included in a corresponding burst may include information indicating a sector ID for a transmission direction (e.g., information for its own sector ID). If information on a sector ID and order information are transmitted/indicated in a sub-7 GHz band, corresponding information may be omitted.

At this time, the STA may measure the best TX sector ID of the AP using the PPDU/frame included in the burst and perform its own RX sector sweep (S1430). In this case, the STA may perform a reception operation in quasi-omni mode only during the TX sector sweep of the AP.

In this regard, a specific training field (TRN field) to support RX sector sweep of STA may be defined to be included at the end of the corresponding PPDU/frame. For example, the specific training field may be designed to have a structure identical or similar to a TRN field of EDMG BRP-RX/TX PPDU, TRN-R unit, etc.

Specifically, the STA may perform reception operation in quasi-omni mode only during TX sector sweep of the AP, and may be configured/defined to operate in RX sector sweep mode only for specific training fields.

After the burst transmission of the AP, the STA may transmit a feedback frame to the AP in the sub-7 GHz band (S1440). Here, the feedback frame may include information for the best TX sector ID of the AP.

Next, the AP may transmit a response frame (e.g., an ACK frame) in the sub-7 GHz band (S1450).

In a simplified procedure as in Fig. 14, the STA may use its measured best RX sector in the TX sector direction, and the AP may use its best TX sector fed back from the STA in the RX sector direction.

That is, with respect to the steps in the aforementioned FIG. 14, steps S1410, S1440, and S1450 may be configured/defined to be performed in the sub-7 GHz band, and steps S1420 and S1430 may be performed in the mmWave band.

Additionally or alternatively, in relation to the procedure of FIG. 13 and/or FIG. 14, beamforming training may be performed by selecting only some sectors (e.g., some TX/RX sectors). An indication related thereto may be defined in a control frame or element for the SLS/BRP procedure of an mmWave band in a sub-7GHz band, or information for a corresponding indication may be transmitted and received in a frame initiating SLS/BRP.

### Embodiment 1-2

First, various beam refinement protocol (BRP) procedures in a WLAN system supporting an mmWave band according to the present disclosure are described.

A BRP procedure may correspond to a sector sweep procedure to acquire a finer beamforming pattern after an SLS procedure described above.

In this regard, as a concept similar to a sector direction in an SLS procedure, an antenna weight vector (AWV) may be considered in a BRP procedure. For example, similar to sector sweep in an SLS procedure, acquisition or modification for an AWV may be performed in a BRP procedure.

FIG. 15 illustrates an example of a BRP procedure between an AP and a STA according to an embodiment of the present disclosure.

Referring to FIG. 15, for the BRP procedure between the AP and the STA, BRP initiation may be configured/defined to be performed in the sub-7 GHz band, and the remaining operations may be performed in the mmWave band.

First, BRP initiation may be performed in the sub-7 GHz band for AP and STA (S1510).

For example, in relation to the acquisition/modification of an AWV and the transmission of feedback/ACK frames in a BRP procedure, allocation information for specific time and/or frequency resources (e.g., a channel, a subchannel), information for a candidate AWV, and information for TX AWV pattern order, etc. may be indicated.

In this regard, specific time and/or frequency resources may be resources allocated for operation in the mmWave band.

An AP may transmit a specific PPDU/frame in an allocated time and/or frequency resources (S1520). Here, a specific training field, etc. may be inserted into a specific PPDU/frame so that an STA's RX AWV acquisition/modification may be performed simultaneously with an AP's TX AWV acquisition/modification. As an example, a corresponding specific training field may be designed to have a structure identical or similar to the TRN field, TRN-R unit, etc. of an EDMG BRP-RX/TX PPDU. In this regard, information for the TX AWV pattern of a specific training field, etc. may be indicated.

In this case, an STA may measure the best TX AWV ID of an AP by using a corresponding PPDU/frame and perform its own RX AWV acquisition/modification (S1530).

Here, the best TX AWV ID may be configured in the form of a list including one or more TX AWV IDs.

After an AP transmits a PPDU/a frame, an STA may transmit a specific PPDU/frame in an allocated time and/or frequency resource or in the same frequency resource after a certain time (e.g., SIFS) after the end of an AP's PPDU/frame transmission (S1540). Here, a specific training field, etc. may be inserted into a specific PPDU/frame so that an AP's RX AWV acquisition/modification may be performed simultaneously with an STA's TX AWV acquisition/modification. As an example, a corresponding specific training field may be designed to have a structure identical or similar to the TRN field, TRN-R unit, etc. of an EDMG BRP-RX/TX PPDU. In this regard, information for the TX AWV pattern of a specific training field, etc. may be indicated. Additionally, an STA may provide feedback on information for an AP's best TX AWV ID to an AP.

In this case, an AP may measure the best TX AWV ID of an STA by using a corresponding PPDU/frame and perform its own RX AWV acquisition/modification (S1550).

After an STA transmits a PPDU/a frame, an AP may transmit a feedback frame to an STA according to the best TX AWV fed back by an STA in an allocated time and/or frequency resource or in the same frequency resource after a certain time (e.g., SIFS) after the end of an STA's PPDU/frame transmission (S1560). Here, a feedback frame may include information for the best TX AWV ID of an STA. As an example, an STA may receive a corresponding feedback frame according to its own best RX AWV.

After an AP transmits a feedback frame, an STA may transmit a response frame (e.g., an ACK frame) according to the best TX AWV fed back by an AP on an allocated time and/or frequency resource or on the same frequency resource after a certain time (e.g., SIFS) after the end of an AP's feedback frame transmission (S1570). As an example, an STA may receive a corresponding response frame according to its own best RX AWV.

With respect to the steps in the aforementioned FIG. 15, step S1510 may be set/defined to be performed in the sub-7 GHz band, and the remaining steps (i.e., steps S1520 to S1570) may be set/defined to be performed in the mmWave band.

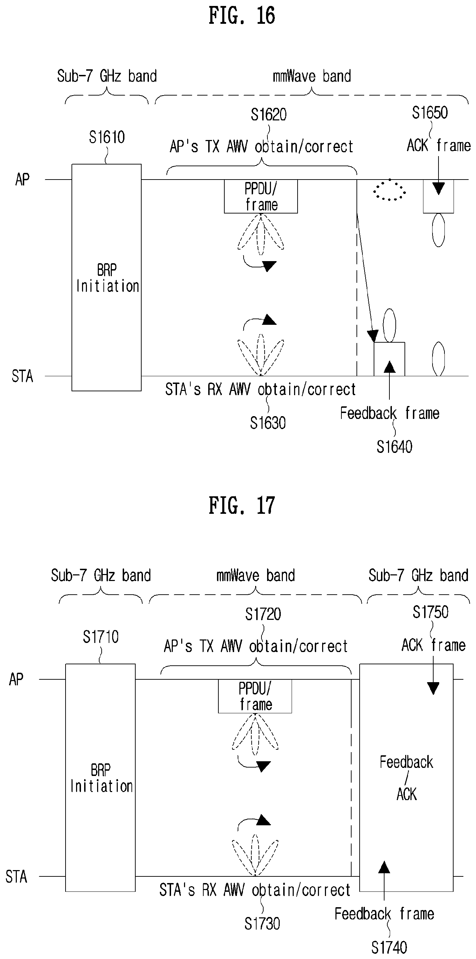

FIG. 16 illustrates another example of a BRP procedure between an AP and a STA according to an embodiment of the present disclosure.

Referring to FIG. 16, compared to FIG. 15, the BRP procedure may be simplified by utilizing antenna pattern reciprocity as described above in the present disclosure.

First, BRP initiation may be performed in the sub-7 GHz band for AP and STA (S1610).

For example, in relation to the acquisition/modification of an AWV and the transmission of feedback/ACK frames in a BRP procedure, allocation information for a specific time and/or frequency resource (e.g., a channel, a subchannel), information for a candidate AWV, and information for TX AWV pattern order, etc. may be indicated.

In this regard, specific time and/or frequency resources may be resources allocated for operation in the mmWave band.

An AP may transmit a specific PPDU/frame in an allocated time and/or frequency resource (S1620). Here, a specific training field, etc. may be inserted into a specific PPDU/frame so that an STA's RX AWV acquisition/modification may be performed simultaneously with an AP's AWV acquisition/modification. As an example, a corresponding specific training field may be designed to have a structure identical or similar to the TRN field, TRN-R unit, etc. of an EDMG BRP-RX/TX PPDU. In this regard, information for the TX AWV pattern of a specific training field, etc. may be indicated.

In this case, an STA may measure the best TX AWV ID of an AP by using a corresponding PPDU/frame and perform its own RX AWV acquisition/modification (S1630).

After an AP transmits a PPDU/a frame, an STA may transmit a feedback frame to an AP in the same TX direction by using its own best RX AWV in an allocated time and/or frequency resource or in the same frequency resource after a certain time (e.g., SIFS) after the end of an AP's PPDU/frame transmission (S1640). Here, a feedback frame may include information for the best TX AWV ID of an AP. As an example, an AP may receive a corresponding feedback frame in a quasi-omni mode. Alternatively, an AP may receive a corresponding feedback frame in the best RX direction confirmed through the aforementioned SLS procedure.

After an STA transmits a feedback frame, an AP may transmit a response frame (e.g., an ACK frame) according to the best TX AWV fed back by an STA in an allocated time and/or frequency resource or in the same frequency resource after a certain time (e.g., SIFS) after the end of an STA's feedback frame transmission (S1650). In this case, an STA may receive a corresponding response frame according to its own best RX AWV.

In a simplified procedure as in FIG. 16, an STA may use its own measured best RX AWV as a TV AWV, and an AP may use its own best TX AWV fed back from an STA as an RX AWV.

With respect to the steps in the aforementioned FIG. 16, step S1610 may be configured/defined to be performed in the sub-7 GHz band, and the remaining steps (i.e., steps S1620 to S1650) may be configured/defined to be performed in the mmWave band.

FIG. 17 illustrates another example of a BRP procedure between an AP and a STA according to an embodiment of the present disclosure.

Referring to FIG. 17, compared to FIG. 16, the transmission and reception operations of the feedback frame and the response frame within the BRP procedure may be performed in a different operating frequency band, i.e., the sub-7 GHz band. In other words, BRP initiation, the transmission and reception of a feedback frame and the transmission and reception of a response frame may be performed in a sub-7 GHz band, and in an mmWave band, it may be configured/defined to simply transmit and receive only a PPDU/a frame for AWV acquisition/modification.

First, BRP initiation may be performed in the sub-7 GHz band for AP and STA (S1710).

For example, in relation to the acquisition/modification of an AWV and the transmission of feedback/ACK frames in a BRP procedure, allocation information for a specific time and/or frequency resource (e.g., a channel, a subchannel) for the transmission of the specific PPDU/frame of an AP, information for the candidate AWV of an AP and an STA, and information for TX AWV pattern order within the PPDU/frame of an AP, etc. may be indicated.

In this regard, specific time and/or frequency resources may be resources allocated for operation in the mmWave band.

An AP may transmit a specific PPDU/frame in an allocated time and/or frequency resource (S1720). Here, a specific training field, etc. may be inserted into a specific PPDU/frame so that an STA's RX AWV acquisition/modification may be performed simultaneously with an AP's TX AWV acquisition/modification. As an example, a corresponding specific training field may be designed to have a structure identical or similar to the TRN field, TRN-R unit, etc. of an EDMG BRP-RX/TX PPDU. In this regard, information for the TX AWV pattern of a specific training field, etc. may be indicated.

In this case, an STA may measure the best TX AWV ID of an AP by using a corresponding PPDU/frame and perform its own RX AWV acquisition/modification (S1730).

After an AP transmits a PPDU/a frame, an STA may transmit a feedback frame to an AP in a sub-7 GHz band (S1740). Here, a feedback frame may include information for the best TX AWV ID of an AP.

After the STA transmits a feedback frame, the AP may transmit a response frame (e.g., an ACK frame) in the sub-7 GHz band (S1750).

In a simplified procedure as in FIG. 17, an STA may use its own measured best RX AWV as a TX AWV, and an AP may use its own best TX AWV fed back from an STA as an RX AWV.

That is, with respect to the steps in the aforementioned FIG. 17, steps S1710, S1740, and S1750 may be configured/defined to be performed in the sub-7 GHz band, and steps S1720 and S1730 may be performed in the mmWave band.

Additionally or alternatively, in relation to the procedure of FIG. 16 and/or FIG. 17, beamforming training may be performed by selecting only some AWVs (e.g., some TX/RX AWVs). An indication related thereto may be defined in a control frame or element for the SLS/BRP procedure of an mmWave band in a sub-7GHz band, or information for a corresponding indication may be transmitted and received in a frame initiating SLS/BRP.

### Embodiment 2

This embodiment relates to a signaling method for indicating the application/utilization of a specific beamforming training procedure when various beamforming training procedures (e.g., Embodiment 1) are defined.

As described above, various procedures may be defined for each sector level sweep (SLS) and/or beam refinement protocol (BRP), and a specific procedure may be added or excluded in relation to procedures described in Embodiment 1.

In this regard, when various procedures are defined for SLS and/or a BRP, an efficient (e.g., desirable) beamforming training procedure may be applied to a specific use case to support a corresponding use case. For example, an SLS procedure based on FIG. 12 and a BRP procedure based on FIG. 15 may be a procedure for improving throughput. In addition, an SLS procedure based on FIGS. 13 and 14 and a BRP procedure based on FIGS. 16 and 17 may be a procedure for reducing delay.

Information for a specific beamforming training procedure may be indicated by defining a control frame or element, etc. for the SLS procedure and/or BRP procedure of an mmWave band in a sub-7GHz band. Additionally or alternatively, corresponding information may be indicated in a frame initiating an SLS procedure and/or a frame initiating a BRP procedure.

When a control frame or element for a corresponding procedure is defined respectively for an SLS procedure and a BRP procedure, a specific beamforming training procedure for an SLS procedure and a specific beamforming training procedure for a BRP procedure may be indicated in each control frame or element. On the other hand, when a control frame or element is integrated and defined for an SLS procedure and a BRP procedure, a specific beamforming training procedure for an SLS procedure and/or a specific beamforming training procedure for a BRP procedure may be indicated simultaneously through one subfield. In other words, only a specific procedure may be performed to support the same use case. Alternatively, when a control frame or element is integrated and defined for an SLS procedure and a BRP procedure, a specific beamforming training procedure for an SLS procedure and/or a specific beamforming training procedure for a BRP procedure may be indicated through a defined different subfield. In other words, a different procedure may be performed by considering a different use case.

Additionally or alternatively, when the aforementioned specific beamforming training procedure is indicated in a frame initiating an SLS procedure and a frame initiating a BRP procedure, respectively, a corresponding specific beamforming training procedure may be indicated by defining one specific subfield in each frame.

A subfield for indicating information for a specific beamforming training procedure may be composed of a specific number of bits based on a defined procedure. For example, when three types of procedures are defined respectively for an SLS procedure and a BRP procedure, a corresponding subfield may be composed of 2 bits.

In this regard, when a specific beamforming training procedure for SLS and/or a BRP is indicated simultaneously through one subfield, an SLS procedure and/or a BRP procedure supporting the same use case may be mapped to the value of a corresponding subfield (e.g., excluding a reserved value). Additionally or alternatively, even when a different subfield is defined for an SLS procedure and a BRP procedure, an SLS procedure and/or a BRP procedure supporting the same use case may be mapped to the same value of each subfield (e.g., excluding a reserved value).

In addition, a different number of beamforming training procedures may be defined for an SLS procedure and a BRP procedure. In this case, when an SLS procedure and/or a BRP procedure are indicated simultaneously to one subfield, the number of bits in a subfield may be defined by a method in which a larger number of beamforming training procedures are defined between an SLS procedure and a BRP procedure. Even for a corresponding case, an SLS procedure and/or a BRP procedure supporting the same use case may be mapped to each subfield value (e.g., a value indicating an SLS procedure and a BRP procedure simultaneously). Additionally or alternatively, even when a different subfield is defined, an SLS procedure and/or a BRP procedure supporting the same use case may be mapped to the same value of each subfield (e.g., excluding a reserved value).

Additionally or alternatively, only an SLS procedure or a BRP procedure may be performed in a specific use case. For example, an initiator/a responder may perform only an SLS procedure (or a BRP procedure) by considering only a limited sector (e.g., some sectors) to additionally reduce latency. As another example, it may perform only a BRP procedure (or an SLS procedure) by considering only a limited sector (e.g., some sectors) to improve throughput.

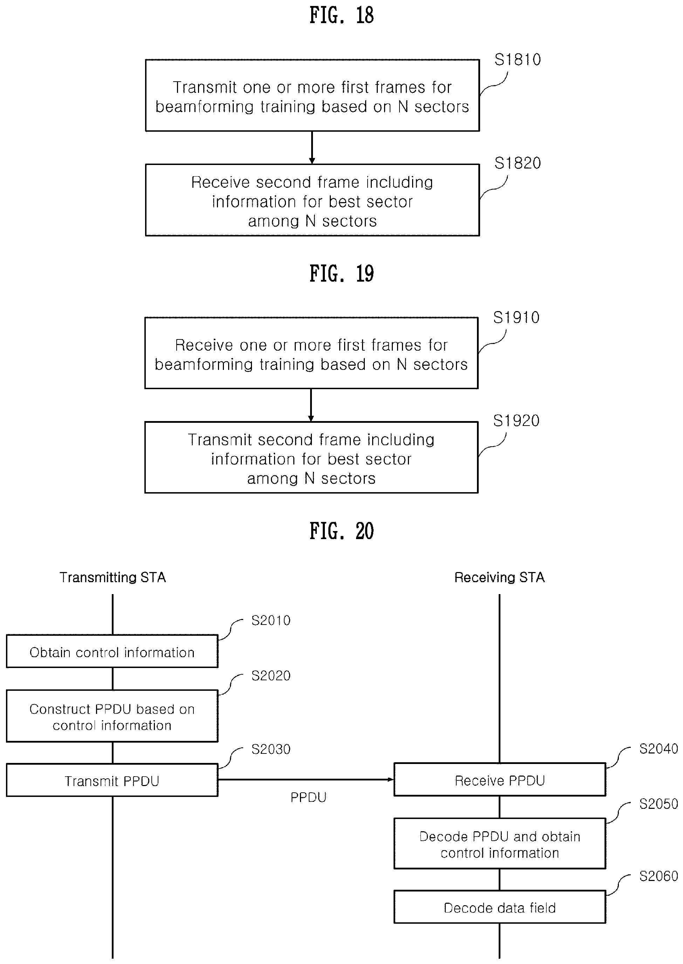

Hereinafter, the operation of the STA according to the embodiments of the present disclosure described above will be described with reference to FIGS. 18 and 19. That is, the examples of FIGS. 18 and 19 may correspond to some of the various examples of the present disclosure.

For example, in FIGS. 18 and 19, for a beamforming training procedure, the first STA may correspond to an initiator and the second STA may correspond to a responder.

FIG. 18 illustrates the operation of a first STA according to an embodiment of the present disclosure.

Referring to FIG. 18, the first STA may transmit, to the second STA, one or more first frames for beamforming training based on N (N>1) sectors (S1810).

For example, the first frame may be for beamforming training for the transmit sector of the first STA (and/or beamforming training for the receive sector of the second STA).

In this regard, beamforming training may include one or more of a sector level sweep phase or a beam refinement protocol phase. If both beamforming training in a sector level sweep phase and beamforming training in a beam refinement protocol phase are performed, beamforming training in a beam refinement protocol phase may be performed after beamforming training in a sector level sweep phase is completed.

The first STA may receive the second frame (e.g., a feedback frame) including information for the best sector among the aforementioned N sectors from the second STA (S1820).

In this regard, when multiple procedure types for beamforming training are defined, prior to the corresponding beamforming training, information for a specific procedure type to be applied to the corresponding beamforming training among the multiple procedure types may be exchanged between the first STA and the second STA. For example, when various procedure types (e.g., see Embodiment 1-1 and/or Embodiment 1-2) are defined for an SLS procedure and/or a BRP procedure, information indicating a procedure type to be actually utilized/applied among them may be transmitted and received/exchanged between an initiator and a responder.

For example, multiple procedure types may be distinguished based on at least one of whether an operation for measuring the best sector by the second STA and a receive sector sweep operation by the second STA are performed simultaneously or whether the operating frequency band of the first frame and the operating frequency band of the second frame are the same.

According to the present disclosure, information for a specific procedure type is exchanged in the first operating frequency band, and beamforming training may be performed in the second operating frequency band different from the first operating frequency band. For example, the first operating frequency band may correspond to one of a 2.4GHz band, a 5GHz band, or a 6GHz band, and the second operating frequency band may correspond to a millimeter wave (mmWave) band or a 60GHz band.

In addition, according to the present disclosure, information for a specific procedure type may be included in a control frame for corresponding beamforming training or may be included in a frame for initiating corresponding beamforming training.

For example, when a control frame for a sector level sweep phase and a control frame for a beam refinement protocol phase are defined individually, information for a specific procedure type may be included in a control frame for a sector level sweep phase and a control frame for a beam refinement protocol phase, respectively. As another example, when a single control frame for a sector level sweep phase and a beam refinement protocol phase is defined, information for a specific procedure type may be indicated through one or two subfields within a corresponding single control frame. In this case, one of the two subfields within a single control frame may be related to a sector level sweep phase, and the remaining subfield may be related to a beam refinement protocol phase.

In addition, according to the present disclosure, a subfield for indicating information for a specific procedure type may be composed of a number of bits based on the number of multiple procedure types defined. As an example, when a different number of procedure types are defined for a sector level sweep phase and a beam refinement protocol phase, the number of bits in a subfield may be calculated based on a phase in which a larger number of procedure types are defined. In addition, when information for a sector level sweep phase and information for a beam refinement protocol phase are indicated simultaneously through a corresponding subfield, a corresponding subfield may be set as a value for indicating one of the combinations of a procedure type for a sector level sweep phase and a procedure type for a beam refinement protocol phase. In this regard, corresponding combinations may be defined as being mapped to the values of a subfield, respectively.

In addition, according to the present disclosure, the aforementioned beamforming training may be configured to be performed only for some sectors among all sectors. As an example, the aforementioned N sectors may correspond to some sectors among all sectors supported by the first STA.

In addition, according to the present disclosure, based on the aforementioned procedure, only one of a sector level sweep phase or a beam refinement protocol phase may be performed, or both phases may be performed.

A method performed by the first STA described in the example of FIG. 18 may be performed by the first device 100 in FIG. 1. For example, one or more processors 102 of the first device 100 of FIG. 1 may be configured to transmit one or more first frames for beamforming training based on N sectors through one or more transceivers 106 and receive the second frame including information for the best sector among the N sectors. Furthermore, one or more memories 104 of the first device 100 may store instructions for performing a method described in the example of FIG. 18 or examples described above when executed by one or more processors 102.

FIG. 19 illustrates the operation of a second STA according to an embodiment of the present disclosure.

Referring to FIG. 19, the second STA may receive, from the first STA, one or more first frames for beamforming training based on N (N>1) sectors (S1910).

For example, the first frame may be for beamforming training for the transmit sector of the first STA (and/or beamforming training for the receive sector of the second STA).

In this regard, beamforming training may include one or more of a sector level sweep phase or a beam refinement protocol phase. If both beamforming training in a sector level sweep phase and beamforming training in a beam refinement protocol phase are performed, beamforming training in a beam refinement protocol phase may be performed after beamforming training in a sector level sweep phase is completed.

The second STA may transmit the second frame (e.g., a feedback frame) including information for the best sector among the aforementioned N sectors to the first STA (S1920).

In this regard, when multiple procedure types for beamforming training are defined, prior to the corresponding beamforming training, information for a specific procedure type to be applied to the corresponding beamforming training among the multiple procedure types may be exchanged between the first STA and the second STA. For example, when various procedure types (e.g., see Embodiment 1-1 and/or Embodiment 1-2) are defined for an SLS procedure and/or a BRP procedure, information indicating a procedure type to be actually utilized/applied among them may be transmitted and received/exchanged between an initiator and a responder.

In the example of FIG. 19, since specific details for multiple procedure types for beamforming training, information for a specific procedure type, an operating frequency band, beamforming training steps, beamforming training for some sectors, etc. are the same as described in the example of FIG. 18, an overlapping description is omitted.

A method performed by the second STA described in the example of FIG. 19 may be performed by the second device 200 in FIG. 1. For example, one or more processors 202 of the second device 200 of FIG. 1 may be configured to receive one or more first frames for beamforming training based on N sectors through one or more transceivers 206 and transmit the second frame including information for the best sector among the N sectors. Furthermore, one or more memories 204 of the second device 200 may store instructions for performing a method described in the example of FIG. 19 or examples described above when executed by one or more processors 202.

FIG. 20 is a diagram for describing a PPDU transmission and reception procedure between a transmitting STA and a receiving STA according to the embodiment of the present disclosure.

For example, in relation to a procedure in FIG. 20, a PPDU that may be used in the mmWave band of a UHR system may include a UHR-STF, a UHR-LTF, a UHR-SIG, and data. All or a part of each part (e.g., a field) may be divided into one or more subparts (e.g., subfields).

In this regard, each field (and a corresponding subfield) may be transmitted in the unit of a 4/N us * M (wherein, N is an upclocking factor and M is an integer). A UHR-STF may be transmitted as an integer multiple of 0.8/N us. As an example, a UHR-STF may be transmitted at 0.8/N us * 10. In addition, it may include the guard interval/N (or short GI/N) of the conventional WLAN system (e.g., WiFi) standard. A common subcarrier frequency spacing value (e.g., delta_f=312.5 kHz * N/M, and N=integer) may be applied to all fields.

In addition, some of the UHR-STF, UHR-LTF, UHR-SIG, and data may be omitted. For example, data or a UHR-SIG may not exist in a PPDU for a specific purpose (e.g., SLS). As another example, a training field (e.g., a training field) may exist at the end of a PPDU for a specific purpose.

For example, a UHR-STF may be composed of the conventional L-STF or VHT-STF or HE-STF or EHT-STF, and may include a field for CFO estimation and AGC. In addition, a UHR-LTF may be composed of the conventional L-LTF or VHT-LTF or HE-LTF or EHT-LTF, and may include a field for CFO estimation and channel estimation. In addition, a UHR SIG may include various control information for a PPDU to be transmitted. As an example, it may include control information for decoding of data or control information for SLS. In addition, data may include user data and a packet for a higher layer. In other words, it may include an MPDU (e.g., an MAC frame). In particular, in the case of a PPDU for SLS, data may include information for SLS.

Some of the procedures in FIG. 20 described below may be omitted or changed.

A transmitting STA may obtain control information for the transmission of a PPDU (S2010). For example, a transmitting STA may obtain the channel information and bandwidth information of an mmWave band to which a PPDU will be transmitted. In addition, in the case of transmitting a PPDU for SLS, a transmitting STA may obtain information for each sector. In this regard, only information for some sectors, not all sectors, may be indicated.

A transmitting STA may configure/generate a PPDU based on obtained control information (S2020). The step of configuring/generating a PPDU may include the step of configuring/generating each field of a PPDU. For example, the step of configuring/generating a PPDU may include the step of configuring a UHR-STF / a UHR-LTF applied to a bandwidth. In addition, the step of configuring/generating a PPDU may include the step of configuring a UHR-SIG field including information such as a bandwidth, etc. In addition, when transmitting a PPDU for SLS/BRP, the step of configuring/generating a PPDU may include the step of configuring a UHR-SIG field including control information related to SLS/BRP. In addition, the step of configuring/generating a PPDU may include the step of generating a data field (e.g., an MPDU) transmitted in a bandwidth. In addition, the step of configuring/generating a PPDU may include the step of generating a data part (e.g., an MPDU) including information related to SLS/BRP when transmitting a PPDU for SLS/BRP.

A transmitting STA may transmit a PPDU configured as described above to a receiving STA (S2030). In the transmission process of a PPDU, a transmitting STA may perform at least one of the operations such as upclocking, CSD, spatial mapping, an IDFT/IFFT operation, GI insertion, etc.

A receiving STA may receive all or a part of the PPDU (S2040). For example, a receiving STA may perform an operation for restoring the result of an operation such as upclocking, CSD, spatial mapping, an IDFT/IFFT operation, GI insertion, etc. applied during the transmission process of a PPDU.

A receiving STA may perform decoding for all or a part of the PPDU and obtain control information (e.g., information such as a bandwidth, etc.) from a decoded PPDU (S2050). For example, a receiving STA may decode the UHR-SIG of a PPDU based on a UHR-STF / a UHR-LTF and obtain information included in a UHR-SIG field. Various information described in the present disclosure may be included in a UHR-SIG, and a receiving STA may obtain information related to a PPDU through a UHR-SIG. In particular, when receiving a PPDU for SLS, a receiving STA may obtain control information related to SLS, etc. through a corresponding PPDU.

A receiving STA may decode the data field of a PPDU based on information obtained as described above and obtain an MPDU included in a data field (S2060). In addition, a receiving STA may perform a processing operation that delivers decoded data to a higher layer (e.g., an MAC layer). In addition, when the generation of a signal is indicated from a higher layer to a PHY layer in response to data delivered to a higher layer, a receiving STA may perform a subsequent operation.

A method proposed in the present disclosure relates to a method for performing beamforming training for some sectors in an mmWave band. According to a method proposed in the present disclosure, new effects may be achieved that throughput and/or efficiency, etc. in a newly defined operating band (e.g., an mmWave band, etc.) may be improved and a beamforming training procedure optimized for a use case may be applied.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, but may be applied to various WLAN or wireless communication systems other than the IEEE 802.11-based system.

## Claims

1. A method comprising:
transmitting, by a first station (STA), one or more first frames for beamforming training based on N (N>1) sectors to a second STA; and
receiving, by the first STA, a second frame including information for a best sector among the N sectors from the second STA,
wherein the beamforming training includes one or more of a sector level sweep phase or a beam refinement protocol phase, and
wherein based on multiple procedure types for the beamforming training being defined, prior to the beamforming training, information for a specific procedure type to be applied to the beamforming training among the multiple procedure types is exchanged between the first STA and the second STA.

2. The method of claim 1, wherein:
the information for the specific procedure type is exchanged in a first operating frequency band, and
the beamforming training is performed in a second operating frequency band different from the first operating frequency band.

3. The method of claim 2, wherein:
the first operating frequency band corresponds to one of a 2.4 GHz band, a 5 GHz band, or a 6 GHz band, and
the second operating frequency band corresponds to a millimeter wave (mmWave) band or a 60 GHz band.

4. The method of claim 1, wherein:
the information for the specific procedure type is included in a control frame for the beamforming training, or is included in a frame for initiating the beamforming training.

5. The method of claim 4, wherein:
based on a control frame for the sector level sweep phase and a control frame for the beam refinement protocol phase being defined individually, the information for the specific procedure type is included in the control frame for the sector level sweep phase and the control frame for the beam refinement protocol phase, respectively.

6. The method of claim 4, wherein:
based on a single control frame for the sector level sweep phase and the beam refinement protocol phase being defined, the information for the specific procedure type is indicated through one subfield or two subfields within the single control frame.

7. The method of claim 6, wherein:
one of the two subfields within the single control frame is related to the sector level sweep phase, and a remaining subfield is related to the beam refinement protocol phase.

8. The method of claim 1, wherein:
a subfield for indicating the information for the specific procedure type is composed of a number of bits based on a number of the multiple procedure types.

9. The method of claim 8, wherein:
based on information for the sector level sweep phase and information for the beam refinement protocol phase being indicated simultaneously through the subfield, the subfield is set as a value for indicating one of combinations of a procedure type for the sector level sweep phase and a procedure type for the beam refinement protocol phase.

10. The method of claim 8, wherein:
based on a different number of procedure types being defined for the sector level sweep phase and the beam refinement protocol phase, a number of bits of the subfield is calculated based on a phase in which a larger number of procedure types are defined.

11. The method of claim 1, wherein:
the multiple procedure types are distinguished based on at least one of whether an operation for measuring the best sector by the second STA and a receive sector sweep operation by the second STA are performed simultaneously or whether an operating frequency band of the first frame and an operating frequency band of the second frame are identical.

12. The method of claim 1, wherein:
the N sectors correspond to some sectors among all sectors supported by the first STA.

13. The method of claim 1, wherein:
based on beamforming training for the sector level sweep phase and beamforming training for the beam refinement protocol phase being performed, the beamforming training for the beam refinement protocol phase follows the beamforming training for the sector level sweep phase.

14. A device comprising:
one or more transceivers; and
one or more processors connected to the one or more transceivers,
wherein the one or more processors are configured to:
transmit, by a first station (STA), one or more first frames for beamforming training based on N (N>1) sectors to a second STA; and
receive, by the first STA, a second frame including information for a best sector among the N sectors from the second STA,
wherein the beamforming training includes one or more of a sector level sweep phase or a beam refinement protocol phase, and
wherein based on multiple procedure types for the beamforming training being defined, prior to the beamforming training, information for a specific procedure type to be applied to the beamforming training among the multiple procedure types is exchanged between the first STA and the second STA.

15. A method comprising:
receiving, by a second station (STA), one or more first frames for beamforming training based on N (N>1) sectors from a first STA; and
transmitting, by the second STA, a second frame including information for a best sector among the N sectors to the first STA,
wherein the beamforming training includes one or more of a sector level sweep phase or a beam refinement protocol phase, and
wherein based on multiple procedure types for the beamforming training being defined, prior to the beamforming training, information for a specific procedure type to be applied to the beamforming training among the multiple procedure types is exchanged between the first STA and the second STA.

16. A device comprising:
one or more transceivers; and
one or more processors connected to the one or more transceivers,
wherein the one or more processors are configured to:
receive, by a second station (STA), one or more first frames for beamforming training based on N (N>1) sectors from a first STA; and
transmit, by the second STA, a second frame including information for a best sector among the N sectors to the first STA,
wherein the beamforming training includes one or more of a sector level sweep phase or a beam refinement protocol phase, and
wherein based on multiple procedure types for the beamforming training being defined, prior to the beamforming training, information for a specific procedure type to be applied to the beamforming training among the multiple procedure types is exchanged between the first STA and the second STA.

17. A processing device comprising:
one or more processors; and
one or more computer memories operably connected to the one or more processors, and based on being executed by the one or more processors, storing instructions for performing a method according to any one claim of claim 1 to claim 13.

18. One or more non-transitory computer-readable media storing one or more instructions that control to perform a method according to any one of claim 1 to claim 13 by being executed by one or more processors.
